(19) Europäisches Patentamt

European Patent Office

Office européen des brevets

(11) Numéro de publication: **0 045 233**
**B1**

(12) **FASCICULE DE BREVET EUROPEEN**

(45) Date de publication du fascicule du brevet: **27.02.85**

(21) Numéro de dépôt: **81401097.1**

(22) Date de dépôt: **08.07.81**

(51) Int. Cl.⁴: **B 60 T 11/20**, B 60 T 13/24

(54) **Maître-cylindre de freinage.**

(30) Priorité: **30.07.80 ES 494695**

(43) Date de publication de la demande:
**03.02.82 Bulletin 82/05**

(45) Mention de la délivrance du brevet:
**27.02.85 Bulletin 85/09**

(84) Etats contractants désignés:
**DE FR GB**

(56) Documents cités:
**DE-B-1 131 534**
**FR-A-2 361 258**
**US-A-2 603 066**
**US-A-2 900 962**

(73) Titulaire: **BENDIBERICA S.A.**
**Balmès 243**
**Barcelona 6 (ES)**

(72) Inventeur: **Bacardit, Juan Simon**
**C/Mallorca 451, 6 4. A**
**Barcelona 13 (ES)**
Inventeur: **Bofill, Joaquim Ferret**
**C/Mallorca 93, 5 3a.**
**Barcelona 29 (ES)**
Inventeur: **Coll, Juan Villaronga**
**C/Escoles 50**
**La Llagosta (Barcelona) (ES)**

(74) Mandataire: **Le Moenner, Gabriel et al**
**SERVICE BREVETS BENDIX 44, Rue François 1er**
**F-75008 Paris (FR)**

Courier Press, Leamington Spa, England.

## Description

L'invention concerne un maître-cylindre de freinage comprenant au moins un piston, et plus spécifiquement un agencement particulier de maître-cylindre permettant de commander le déplacement du piston au moyen d'un effort de poussée et/ou de traction.

L'invention concerne un maître-cylindre de freinage conformément au préambule de la revendication 1.

Un tel maître-cylindre est décrit dans le document US—A—2900962.

Pour des raisons d'encombrement ou d'autres raisons de construction, il est en effet parfois nécessaire de prévoir l'installation du dispositif d'assistance disposé notamment du côté du maître-cylindre opposé à l'organe d'actionnement provenant de la pédale de frein.

Dans ce document, toutefois, le maître-cylindre intègre une partie des éléments de la valve de commande du dispositif d'assistance et comporte par exemple un clapet d'admission d'air atmosphérique disposé dans le piston de maître-cylindre, monté sur l'extrémité antérieure de la tige d'actionnement du clapet d'isolement de vide incorporé dans le dispositif d'assistance et actionné par l'organe d'actionnement du système, la tige d'assistance, creuse, formant passage d'amenée de l'air atmosphérique au dispositif d'assistance et étant fixée au piston de maître-cylindre. Cet agencement, délicat et onéreux, impose notamment de prévoir, à l'extrémité du maître-cylindre opposée au dispositif d'assistance, une structure additionnelle de protection du piston de maître-cylindre, ne permet pas d'actionner le piston directement à partir de l'organe d'actionnement et offre une faible sensibilité en réponse.

Conformément à son objet évoqué plus haut, la présente invention concerne un maître-cylindre dans lequel le piston coopère en appui, par une de ses extrémités, avec un corps de poussée coulissant récepteur de l'organe d'actionnement et avec une extrémité évasée formant épaulement, reçue dans un logement du corps de poussée, de la tige d'assistance traversant à coulissement étanche le piston.

Ainsi, le piston de maître-cylindre est en effet actionnable aussi bien par un effort de traction via la tige d'assistance que par un effort de poussée en provenance de l'organe d'actionnement, via le corps de poussée, dans un agencement simple et robuste.

De plus, cet agencement permet de disposer un disque de réaction entre le piston de maître-cylindre et à la fois l'organe de poussée et l'épaulement de la tige d'assistance, procurant ainsi une sensibilité parfaite, le corps de poussée intervenant en permanence le premier en appui avec le piston, via le disque de réaction.

Ainsi, selon une caractéristique plus particulière de l'invention, un disque de réaction annulaire est placé contre ladite extrémité d'appui du piston, entre celui-ci et le corps de poussée et l'épaulement de la tige d'assistance.

Le document US—A—2603066 décrit par ailleurs un ensemble amplificateur de pression de freinage interposé entre le circuit de freins et un maître-cylindre non-assisté, et actionné par la pression fournie par ce dernier, dans un agencement complexe, d'encombrement important et offrant une faible sensibilité en réponse.

A titre d'exemples non limitatifs de la portée de la présente invention et en représentations schématiques, les dessins ci-joints montrent plusieurs modes de réalisation de l'invention. Sur ces dessins:

— la figure 1 est une section axiale d'un maître-cylindre montrant une première approche de l'agencement de l'invention;
— la figure 2 est une section selon la ligne II—II de la figure 1;
— la figure 3 est une section axiale de l'extrémité d'actionnement d'un maître-cylindre analogue à celui des figures précédentes, mettant en oeuvre les caractéristiques de la présente invention;
— la figure 4 est une section axiale d'un maître-cylindre dans une variante de l'agencement de la figure 1;
— la figure 5 est une section transversale conformément à la ligne V—V de la figure 4; et
— la figure 6 est une section axiale partielle d'un maître-cylindre comme celui de la figure 4, mais pourvu d'un dispositif de réaction élastique.

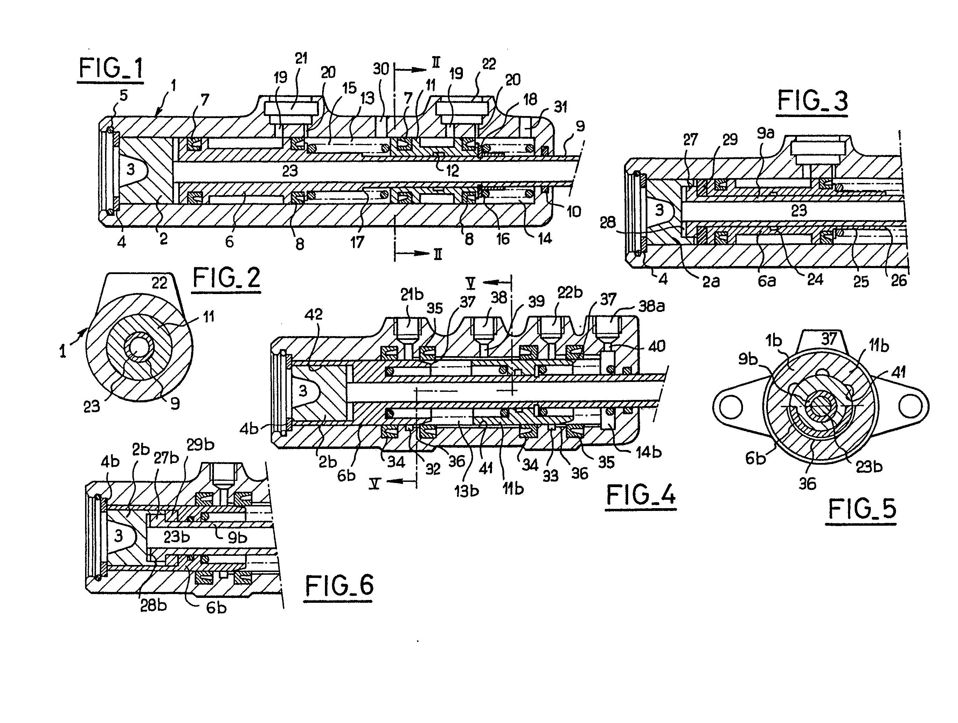

Sur les figures 1 et 2, on a représenté un maître-cylindre 1 fermé à une extrémité et qui à l'autre extrémité comporte un corps de poussée coulissant 2, pourvu d'un siège à rotule 3, sur lequel on peut appliquer l'extrémité complémentaire, comme c'est habituel, d'une tige d'actionnement (non représentée) provenant de la pédale du frein. Ce poussoir 2 est retenu dans sa position au moyen d'une rondelle 4, retenue à son tour par un petit anneau élastique 5.

A l'intérieur de l'alésage du maître-cylindre 1, coulisse un piston primaire 6 s'ajustant hermétiquement au moyen de deux coupelles terminales 7 et 8 et il se prolonge dans le sens de l'actionnement en formant une tige 9 qui sort du cylindre à travers un orifice formé par le fond du cylindre en question et pourvu d'un joint d'étanchéité 10.

Sur la tige 9 s'ajuste en coulissant un piston secondaire 11, pourvu d'une paire de coupelles similaires à celles du piston 6, indiquées avec les mêmes références et d'un joint intérieur 12 qui s'ajuste avec la superficie de la tige. De cette manière, se définissent deux enceintes de pression, une enceinte primaire 13 et une enceinte secondaire 14.

Le piston primaire 6 et le poussoir 2 sont maintenus dans la position de repos représentée par des moyens élastiques non illustrés, et les positions relatives des pistons sont maintenues par deux ressorts intermédiaires 15 et 16 situés dans les enceintes 13 et 14. D'autre part, le piston secondaire a son parcours limité sur la tige 9 par deux butées formées respectivement par l'échelon 17 de cette dernière et par un "circlips" 18 monté dans une rainure complémentaire de la tige.

Chaque enceinte 13 et 14 communique au moyen d'un passage principal 19 et d'un passage de compensation 20 avec des raccords correspondants 21 et 22 sur lesquels on peut connecter des tuyaux provenant de réservoirs d'alimentation éloignés.

La tige 9 peut être fixée de n'importe quelle manière à un moyen de traction et notamment à l'organe mobile d'un dispositif d'assistance (non représenté) et d'autre part, elle est creuse et sert de guide à une tige d'actionnement 23 que l'on peut connecter à l'organe mobile de la valve correspondante et qui s'appuie contre l'extrémité du poussoir 2 afin d'être soumise à la force d'actionnement correspondante.

Le fonctionnement de ce cylindre est identique à celui de n'importe quel dispositif conventionnel.

Le cylindre décrit peut être pourvu d'un dispositif de réaction élastique tel qu'il est décrit relativement à la figure 3.

Dans ce cas, le piston primaire 6a est indépendant de la tige d'assistance 9a et il forme une pièce tubulaire qui s'ajuste en coulissant hermétiquement sur cette tige d'assistance au moyen d'un joint 24 et qui se prolonge dans le sens de l'actionnement au moyen d'un manchon 25 de la longueur adéquate pour former un arrêt 26 équivalent à l'échelon 17 du mode de réalisation précédent.

La tige d'assistance 9a dépasse de l'extrémité d'actionnement du piston primaire 6a et forme une collerette 27 qui est contenue à l'intérieur d'un logement 28, formé dans la face interne du poussoir 2a. Entre la collerette et la piston se trouve une rondelle 29 en matériau élastique formant le dispositif de réaction; dans ce but, ainsi qu'on peut le constater, les différentes parties sont dimensionnées de telle manière que le bord du poussoir puisse entrer en contact avec la rondelle élastique avant que le fond du logement 28 atteigne la face opposée de la collerette. La tige d'actionnement 23 de la valve de commande du dispositif d'assistance n'est pas modifiée et elle s'appuie contre le fond du logement 28.

Dans ce mode de réalisation, la communication des enceintes de pression 13 et 14 evec les circuits de freins respectifs s'effectue de la façon habituelle, par exemple, à travers les ouvertures 30 et 31 visibles sur la figure 1.

La figure 4 représente une variante de maître-cylindre qui répond au même principe fonctionnel que celui de la figure 1, mais comprend moyens qui permettent de réduire sensiblement la longueur du maître-cylindre, avec les avantages que cela apporte au montage du système.

Comme on le sait, la longueur totale d'un maître-cylindre de ce type, est imposée par la longueur de la course des pistons que l'on désire, d'une part, la longueur nécessaire de ces pistons afin d'obtenir un bon guidage, d'autre part, et enfin par les distances qu'il est nécessaire de prévoir entre les bords extrêmes des pistons et les ouvertures de sortie du fluide hydraulique, afin que ces dernières ne soient obturées en aucun moment par les pistons.

Pour ce faire, les pistons primaire 6b et secondaire 11b possèdent une surface latérale cylindrique et lisse, et les entrées de fluide hydraulique 21b et 22b communiquent avec deux rainures annulaires 32 et 33, formées sur la surface interne du cylindre. De part et d'autre de chaque rainure, on a disposé une paire de joints d'étanchéité 34 et 35 montées dans des gorges annulaires de l'alésage du cylindre. Entre chaque rainure et le joint 35 de chaque paire, qui est le joint le plus près de l'enceinte de pression correspondante, s'étendent des rainures longitudinales 36 et les extrémités de travail des pistons possèdent plusieurs encoches ou chanfreins 37 qui dans la position de repos de l'ensemble sont légèrement séparés du bord arrière des joints 35 et définissent les passages d'alimentation et de compensation.

D'autre part les raccords 38 et 38a pour la connexion des circuits de freins respectifs, débouchent au moyen de canaux 39 et 40 dans les enceintes 13b et 14b en des points, qui, comme dans le cas du canal 39, peuvent être recouverts par l'un ou l'autre des pistons à certains moments du fonctionnement du système. Ainsi dans le cas de la figure 4, le canal 39 est recouvert par le piston secondaire 11b. Cependant, dans chaque enceinte, la surface intérieure du cylindre présente une série de rainures longitudinales 41 qui communiquent avec l'orifice du canal (canal 39 dans ce cas) de telle façon que la communication est néanmoins assurée à tout moment, bien que l'on fasse abstraction des distances de course entre les bords extrêmes des pistons et les ouvertures de sortie.

Le réduction de la longueur possible apparaît clairement à la comparaison des figures 1 et 4.

Dans l'exécution de la figure 4, le piston primaire 6b a été modifié de façon que son extrémité d'actionnement s'appuie directement, dans la postion de repos, contre la rondelle d'arrêt 4b, et la poussoir 2b est monté à l'intérieur d'une cavité 42 dudit piston, prévue du côté de l'extrémité d'actionnement de celui-ci.

La figure 6 montre l'application d'un dispositif de réaction élastique à la variante des figures 4 et 5 de la même manière que décrit précédemment relativement à la figure 3 de sorte qu'une description détaillée à ce sujet n'est pas nécessaire, les éléments analogues portant les mêmes références numériques.

## Revendications

1. Maître-cylindre (1) de freinage de véhicule, comprenant un logement cylindrique dans lequel coulisse au moins un piston (6a; 6b, 11b) définissant au moins une enceinte de pression (13b, 14b) pour un circuit de freins, des moyens (21b, 22b) pour connecter l'enceinte à un réservoir de fluide hydraulique et des moyens (39, 40) pour connecter cette enceinte au circuit de frein, le piston étant destiné à être couplé à un dispositif d'assistance via une tige d'assistance (9a, 9b) s'étendant axialement dans le maître-cylindre, dans la direction opposée à l'organe d'actionnement et faisant saillie hors du maître-cylindre en vue de sa connexion à un organe de traction du dispositif d'assistance actionnable par un organe d'actionnement provenant, du côté du maître-cylindre opposé au dispositif d'assistance, d'une pédale de frein de véhicule, caractérisé en ce que le piston (6a, 6b) coopère en appui, par une de ses extrémités, avec un corps de poussée coulissant (2a, 2b) récepteur de l'organe d'actionnement et avec une extrémité évasée (27, 27b) formant épaulement, reçue dans un logement (28, 28b) du corps de poussée (2a, 2b), de la tige d'assistance (9a, 9b) traversant à coulissement étanche le piston (6a, 6b).

2. Maître-cylindre selon la revendication 1, caractérisé en ce qu'il comprend un disque de réaction annulaire (29, 29b) placé contre ladite extrémité d'appui du piston (6a, 6b).

3. Maître-cylindre selon la revendication 1 ou la revendication 2, caractérisé en ce que le corps de poussée (2b) est reçu dans une cavité (42) formée dans ladite extrémité du piston (6b).

4. Maître-cylindre selon la revendication 1 ou la revendication 3, caractérisé en ce qu'il comporte des moyens de retenue (4, 4b) du corps de poussée (2a, 2b).

5. Maître-cylindre selon l'une des revendications précédentes, caractérisé en ce que les coupelles d'étanchéité (34, 35) du piston (6b, 11b) sont montées fixes dans des rainures annulaires formées dans la paroi intérieure du logement du maître-cylindre, le piston (6b, 11b) présentant une surface latérale périphérique lisse s'ajustant hermétiquement avec ces coupelles.

6. Maître-cylindre selon l'une des revendications précédentes, caractérisé en ce qu'il comporte un piston secondaire (11, 11b) traversé à coulissement étanche par la tige d'assistance (9a, 9b).

7. Maître-cylindre selon la revendication 6, caractérisé en ce que la tige d'assistance (9, 9b) comporte au moins une butée (18) pour le piston secondaire (11, 11b).

8. Maître-cylindre selon l'une des revendications précédentes, caractérisé en ce que la tige d'assistance (9, 9b) est creuse et constitue un guide axial pour une tige d'actionnement (23; 23b) d'une valve de contrôle du dispositif d'assistance, ladite tige d'actionnement ayant une première extrémité coopérant en appui avec le corps de poussée (2, 2b).

## Patentansprüche

1. Hauptbremszylinder (1) für Fahrzeugbremsen, mit einer zylindrischen Lagerbohrung, in der mindestens ein Kolben (6a; 6b 11b) gleitet, der mindestens eine Druckkammer (13b, 14b) für einen Bremskreis bildet, Mitteln (21b; 22b) zum Verbinden der Druckkammer mit einem Hydraulikmittelreservoir und Mitteln (39, 40) zum Verbinden dieser Druckkammer mit dem Bremskreis, wobei der Kolben verbindbar ist mit einer Servovorrichtung über eine Servostange (9a, 9b), die sich axial durch den Hauptbremszylinder in der dem Betätigungselement entgegengesetzten Richtung erstreckt und aus dem Hauptbremszylinder an seiner Verbindungsstelle mit einem zugelement der Servovorrichtung vorsteht, die durch ein Betätigungselement betätigbar ist, das auf der der Servovorrichtung gegenüberliegenden Seite des Hauptbremszylinders von einem Bremspedal des Fahrzeuges kommt, dadurch gekennzeichnet, daß der Kolben (6a, 6b) mit einem seiner Enden an einem das Betätigungselement aufnehmenden Schieber (2a, 2b) und an einem eine Schulter bildenden, in einer Lagerbohrung (28, 28b) des Scheibers (2a, 2b) aufgenommenen erweiterten Ende (27, 27b) der Servostange (9a, 9b) abgestützt ist, die sich abgedichtet und gleitend durch den Kolben (6a, 6b) erstreckt.

2. Hauptbremszylinder nach Anspruch 1, dadurch gekennzeichnet, daß er eine ringförmige Stützscheibe (29, 29b) aufweist, die an dem besagten Abstützende des Kolbens (6a, 6b) anliegt.

3. Hauptbremszylinder nach Anspruch 1 oder 2, dadurch gekennzeichnet, daß der Schieber (2b) in einem Hohlraum (42) sitzt, der in dem besagten Ende des Kolbens (6b) gebildet ist.

4. Hauptbremszylinder nach Anspruch 1 oder 3, dadurch gekennzeichnet, daß er Haltemittel (4, 4b) für den Schieber (2a, 2b) aufweist.

5. Hauptbremszylinder nach einem der vorhergehenden Ansprüche, dadurch gekennzeichnet, daß die Dichtringe (34, 35) des Kolbens (6b, 11b) in Ringnuten festgelegt sind, die in der Innenwand der Lagerbohrung des Hauptbremszylinders gebildet sind, wobei der Kolben (6b, 11b) eine glatte seitliche Umfangsfläche aufweist, die hermetisch in seine Dichtringe eingepaßt ist.

6. Hauptbremszylinder nach einem der vorhergehenden Ansprüche, dadurch gekennzeichnet, daß er einen zweiten Kohben (11, 11b) aufweist, durch den sich die Servostange (9a, 9b) gleitend und abgedichtet erstreckt.

7. Hauptbremszylinder nach Anspruch 6, dadurch gekennzeichnet, daß die Servostange (9, 9b) mindestens einen Anschlag (18) für den zweiten Kolben (11, 11b) aufweist.

8. Hauptbremszylinder nach einem der vorhergehenden Ansprüche, dadurch gekennzeichnet, daß die Servostange (9, 9b) hohl ist und eine axiale Führung für eine Betätigungsstange (23; 23b) eines Steuerventils der Servovorrichtung bildet, wobei die Betätigungsstange mit einem ersten Ende an dem Schieber (2, 2b) angreift.

## Claims

1. A master cylinder (1) for vehicle brakes, comprising a cylindrical bore slidingly receiving at least one piston (6a; 6b, 11b) defining at least one pressure space (13b, 14b) for a brake circuit, means (21b; 22b) for connecting the space to a hydraulic fluid reservoir, and means (39, 40) for connecting said space to the brake circuit, the piston being adapted to be connected to a servo device via a servo rod (9a, 9b) axially extending in the master cylinder in a direction opposite to the actuating member and projecting from the master cylinder at its connection to a traction member of the servo device actuatable by an actuating member connected to a brake pedal of the vehicle at the side of the master cylinder opposite to the servo device, characterized in that the piston (6a, 6b) is in engagement at one of its ends with a sliding push member (2a, 2b) receiving the actuating member and with an increased end (27, 27b) of the servo rod (9a, 9b) slidingly and sealingly traversing the piston (6a, 6b), said increased end forming a shoulder received in a bore (28, 28b) of the push member (2a, 2b).

2. A master cylinder according to claim 1, characterized in that it comprises an angular reaction disc (29, 29b) supported against said abutment end of the piston (6a, 6b).

3. A master cylinder according to claim 1 or claim 2, characterized in that the push member (2b) is received in a cavity (42) formed in said end of the piston (6b).

4. A master cylinder according to claim 1 or claim 3, characterized in that it comprises holding means (4, 4b) for the push member (2a, 2b).

5. A master cylinder according to any of the preceding claims, characterized in that the sealing rings (34, 35) of the piston (6b, 11b) are fixedly mounted in annular grooves formed in the inner wall of the bore of the master cylinder, the piston (6b, 11b) having a smooth lateral peripheral surface hermetically and matingly seated in its seal rings.

6. A master cylinder according to any of the preceding claims, characterized in that it comprises a secondary piston (11, 11b), the servo rod (9a, 9b) slidingly and sealingly traversing the secondary piston.

7. A master cylinder according to claim 6, characterized in that the servo rod (9, 9b) comprises at least one abutment (18) for the secondary piston (11, 11b).

8. A master cylinder according to any of the preceding claims, characterized in that the servo rod (9, 9b) is hollow and constitutes an axial guide for an actuating rod (23, 23b) of a control valve of the servo device, said actuating rod having a first end in engagement with the push member (2, 2b).

FIG_1

FIG_2

FIG_3

FIG_4

FIG_5

FIG_6